# EUROPÄISCHE PATENTSCHRIFT

(11) **EP 0 448 801 B1**
(45) Veröffentlichungstag und Bekanntmachung des Hinweises auf die Patenterteilung: **22.06.1994**
(21) Anmeldenummer: 90123991.3
(22) Anmeldetag: 12.12.1990
(51) Int. Cl.: B23Q 3/12, B25D 17/08

(54) **Handwerkzeugmaschine mit abnehmbarer Werkzeugaufnahme**
Portable machine tool with removable tool holder
Machine-outil portable avec porte-outil amovible

(30) Priorität: 30.03.1990 DE 4012239
(43) Veröffentlichungstag der Anmeldung: 02.10.1991
(73) Patentinhaber: ROBERT BOSCH GMBH, 70442 Stuttgart (DE)
(72) Erfinder: Reibetanz, Wilbert, Dipl.-Ing., W-7022 Leinfelden-E. 1 (DE); Wanner, Karl, Dr.-Ing., W-7022 Leinfelden-E. 2 (DE); Baumann, Otto, W-7022 Leinfelden-E. 2 (DE); Müller, Rolf, Dipl.-Ing., W-7022 Leinfelden-E. (DE)

(56) Entgegenhaltungen:
- EP-A- 0 265 378
- EP-A- 0 265 380
- DE-A- 3 714 679
- FR-A- 2 543 036

## Beschreibung

### Stand der Technik

Die Erfindung geht aus von einer Handwerkzeugmaschine nach dem Oberbegriff des Anspruchs 1. Aus der EP-A 265 380 ist bereits ein Handgerät mit lösbarem Werkzeughalter bekannt, bei dem die Verriegelungskugeln von einer als Bogendreieck ausgebildeten Ringfeder gehalten werden. Diese Ringfeder benötigt radial einen großen Bauraum, so daß die Verriegelung des Werkzeughalters z. B. nicht mehr in einem normgerechten Spannhals Platz finden kann. Daher ist die Verriegelung vor dem Spannhals angeordnet, was die Baulänge des Bohrgerätes verlängert und die Arbeit an unzugänglichen Stellen erheblich erschwert.

### Vorteile der Erfindung

Die erfindungsgemäße Handwerkzeugmaschine mit den kennzeichnenden Merkmalen des Anspruchs 1 hat demgegenüber den Vorteil, daß die Demontagevorrichtung für die Werkzeugaufnahme die Baulänge der Maschine nicht vergrößert. Insbesondere ist die Unterbringung der Demontagevorrichtung innerhalb des üblichen Spannhalses einer Handbohrmaschine möglich. Die leichte Demontierbarkeit ermöglicht den Austausch gegen eine Werkzeugaufnahme anderer Art, wenn beispielsweise andere Werkzeugsysteme mit speziellen Schaftausbildungen verwendet werden sollen. Gelegentlich verwenden Benutzer ungeeignete Bohrwerkzeuge mit zu weichem Schaft, der durch den Schlagbetrieb möglicherweise aufgeweitet wird. Solche Werkzeuge lassen sich bei abgenommener Werkzeugaufnahme leichter entnehmen.

Durch die in den Ansprüchen 2 folgende aufgeführten Maßnahmen sind vorteilhafte Weiterbildungen und Verbesserungen der im Anspruch 1 angegebenen Maschine möglich. Besonders vorteilhaft ist es, daß der Ring zum Halten der Verriegelungsmittel gemäß Anspruch 2 bei der Montage und Demontage der Werkzeugaufnahme von außen gegenüber dem Gehäuse festlegbar ist. Dies ermöglicht beim anschließenden Verdrehen des Werkzeughalters die Verriegelungskörper mit den Öffnungen des Rings in Übereinstimmung zu bringen. Ein Durchbruch im Gehäuse gemäß Anspruch 3 ermöglicht das Durchstecken eines Stiftes, insbesondere des Knebels eines Bohrfutterschlüssels durch den Durchbruch und ein Einführen in die Arretierbohrungen des Rings. Damit ist eine besonders bedienungsfreundliche Methode zum Entriegeln des Rings gegeben. Rastmittel an dem Ring und an dem an ihn angrenzenden Bauteil gemäß den Ansprüchen 4 bis 6 stellen einen festen Halt des Rings auch während des Schlagbetriebs sicher. Durchbrüche zum Entnehmen der Verriegelungselemente im Gehäuse gemäß Anspruch 7 ermöglichen ein vollständiges Entnehmen der Verriegelungselemente, zum Beispiel mittels eines Stabmagneten. Die punktsymmetrische Ausbildung des Rings gemäß Anspruch 8 verhindert in Verbindung mit der Lage der Rastnut Fehler bei der Montage des Rings. Die Anbringung der Gehäusedurchbrüche im Bereich des Spannhalses bzw. die Überdeckung der Gehäusedurchbrüche durch eine Hülse gemäß den Ansprüchen 9 und 10 verhindern das Eindringen von Staub und Schmutz in die Werkzeugaufnahme. Die Ausbildung des Rings als dünner konzentrischer Blechring gemäß Anspruch 11 führt zu einer radial platzsparenden Bauweise, so daß die gesamte Demontage-Vorrichtung zum Beispiel innerhalb des marktüblichen Spannhalses mit einem Durchmesser von 43 mm untergebracht werden kann.

### Zeichnung

Ein Ausfübrungsbeispiel der Erfindung ist in der Zeichnung dargestellt und in der nachfolgenden Beschreibung näher erläutert.

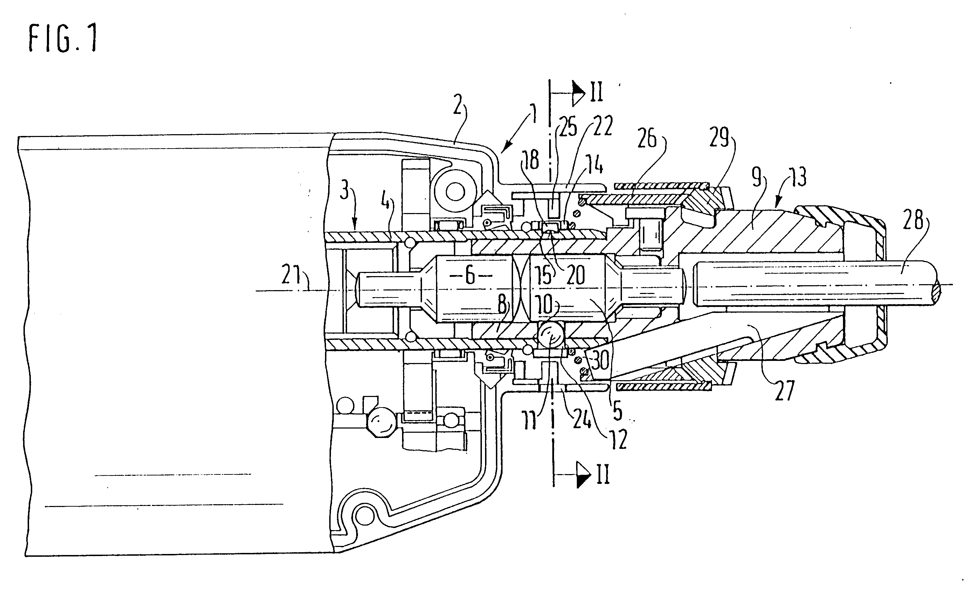

Figur 1 zeigt den vorderen Teil eines Bohrhammers im Schnitt,
Figur 2 zeigt einen Querschnitt durch eine Demontage-Vorrichtung gemäß Linie II-II in Figur 1 und Figur 3 zeigt einen Ring aus Figur 2 in abgewickelter Darstellung.

### Beschreibung des Ausführungsbeispiels

Ein Bohrhammer 1 weist ein zweischaliges Gehäuse 2 auf, in dem ein nicht gezeigter Motor und ein Schlagwerk 3 untergebracht sind. Der Motor treibt eine rohrförmige Hülse 4 drehend an, die das Schlagwerk 3 umgibt. Von dem Schlagwerk 3 sind nur zwei Döpper 5, 6 gezeigt, die von einem Schläger periodisch beaufschlagt werden. Statt des gezeigten Schlagwerks kann ebensogut ein Rasten- oder ein Federschlagwerk Verwendung finden.

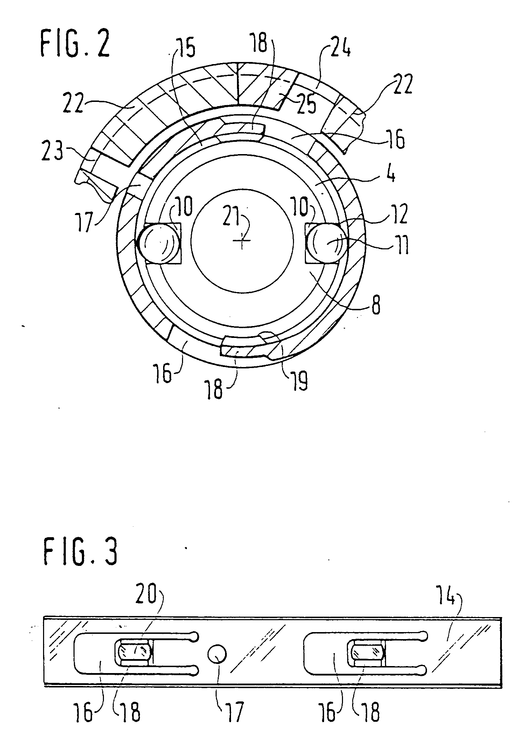

In die Hülse 4 ist das rohrförmige Ende 8 eines Bohrfutterkörpers 9 eingeschoben, der zu einer Werkzeugaufnahme 13 gehört. Das Ende 8 weist zwei Ausnehmungen 10 zur Aufnahme zweier kugelförmiger Verriegelungselemente 11 auf. Die Hülse 4 weist zwei zu den Ausnehmungen 10 korrespondierende Bohrungen 12 auf, in die die Verriegelungselemente 11 eintauchen. Im Bereich der Bohrungen 12 ist die Hülse 4 von einem Ring 14 aus Stahlblech umschlossen, der in einer umlaufenden Nut 15 der Hülse 4 geführt ist. Der Ring 14 ist um seine Achse 21 drehbar, die mit der Achse der Werkzeugaufnahme 13 übereinstimmt. Die in radialer Richtung gemessene Materialstärke des Rings 14 ist nicht größer, wie aus Festigkeitsgründen notwendig. Sie ist insbesondere geringer als der halbe Durchmesser der Verriegelungselemente 11. Der in Figur 3 in Abwicklung dargestellte Ring 14 weist Mittel zum Entriegeln der Verriegelungselemente 11 auf, die als Öffnungen 16 ausgebildet sind. Weiterhin hat der Ring 14 Haltemittel zum Festlegen in Umfangsrichtung gegenüber dem Gehäuse 2, die hier als Arretierbohrung 17 ausgebildet sind. Weiter weist der Ring 14 Rastmittel 18 auf, die als in die Nut 15 eingreifende Federzungen ausgebildet sind. Die Federzungen 18 sind einstückig an den Ring 14 angeformt und sind nach innen in Richtung auf die Nut 15 abgebogen. Mindestens eine der Federzungen 18 greift in eine axial gerichtete Rastnut 19 in der Hülse 4 ein, so daß der Ring 14 in seiner in Figur 2 dargestellten Schließstellung gegen Verdrehen gesichert ist. Die Federzungen weisen auf ihrer in die Nut 15 eingreifenden Seite eine längsgerichtete Ausräumung 20 mit kreisbogenförmigem Querschnitt auf, so daß die Federzungen 18 sich leicht und ohne Rastwiderstand über die aus der Nut 15 herausstehenden Verriegelungselemente schieben lassen.

Der Ring 14 ist mit jeweils zwei spiegelbildlich zueinander angeordneten Öffnungen 16 und Federzungen 18 ausgestattet. Die Arretierbohrung 17 liegt um etwa 90° versetzt zu den Öffnungen 16. Die Öffnungen 16 und die Federzungen 18 liegen unmittelbar nebeneinander. Bezüglich eines Punktes auf der Achse 21 des Ringes 14 liegen also die beiden Öffnungen 16 und die beiden Federzungen 18 jeweils punktsymmetrisch. Die Rastnut 19 liegt um etwa 90° versetzt zu den Ausnehmungen 10 für die Verriegelungselemente 11. Diese Anordnung macht die Funktion des Rings 14 unabhängig von seiner Montagelage. Er kann also in beliebiger Lage auf die Hülse 4 aufgeschoben werden.

Der Ring 14 ist nach außen durch das Gehäuse 2, insbesondere einen daran angeordneten Spannhals 22 überdeckt. Der Spannhals 22 mit einem Außendurchmesser von 43 mm weist seinerseits mehrere Durchbrüche 23, 24 im Bereich des Ringes 14 auf. Der Durchbruch 23 dient der Festlegung des Rings 14 in Umfangsrichtung und ist so gestaltet, daß ein Stift, insbesondere der Knebel eines Bohrfutterschlüssels hindurchgesteckt werden kann. Eine oder zwei gegenüberliegende weitere Durchbrüche 24 können mit den Öffnungen 16 in Übereinstimmung gebracht werden und dienen der Entnahme der Verriegelungselemente 11. Die Durchbrüche 23, 24 können entweder von einer Schelle bzw. einem auf den Spannhals 22 montierbaren, nicht gezeigten Zusatzhandgriff verschlossen sein oder durch eine Hülse überdeckt sein. Für die Montage eines Zusatzhandgriffs weist der Spannhals 22 nach innen ragende Verstärkungsrippen 25 auf, die insbesondere im Bereich der Trennfugen der beiden Schalen des Gehäuses 2 diese gegeneinander abstützt. Eine Sicherungshülse 26 gehört zu der Werkzeugaufnahme 13, die im Ausführungsbeispiel als Bohrfutter mit Bohrfutterkörper 9 und Futterbacken 27 ausgebildet ist. Zwischen die vorzugsweise drei Futterbacken 27 ist ein Bohrwerkzeug 28 mit glattem Schaft spannbar. Dazu wird ein mit den Futterbacken 27 in Verbindung stehender Zahnkranz 29 z. B. mit einem Futterschlüssel gedreht. Der Zahnkranz 29 ist durch die von einer Feder 30 belasteten Sicherungshülse 26 gegen unbeabsichtigtes Verdrehen während des Schlagbetriebs gesichert. Die Feder 30 ist gegen den Ring 14 abgestützt und benötigt somit kein eigenes Widerlager. Die Werkzeugaufnahme 13 kann als Bohrfutter aber auch als SDS-plus Werkzeugaufnahme (vgl. DE-PS 25 51 125) oder für andere Werkzeugsysteme in anderer Weise ausgebildet sein.

Die Demontage der Werkzeugaufnahme 13 erfolgt bei stehender Maschine, also stillstehender Hülse 4 und stillstehender Werkzeugaufnahme 13 dadurch, daß ein Stift bzw. der Knebel eines Bohrfutterschlüssels durch den Durchbruch 23 im Spannhals 22 in die Arretierbohrung 17 eingeführt wird. Anschließend wird die Werkzeugaufnahme 13 soweit gedreht, bis die Öffnungen 16 in Höhe der Verriegelungselemente 11 zu liegen kommen. Dabei rastet die Federzunge 18 aus der Rastnut 19 aus und gleitet entlang der Nut 15. Die Verriegelungselemente 11 sind nun durch den Ring 14 freigegeben und können zum Beispiel mittels eines Stabmagneten, der durch die Gehäusedurchbrüche 24 in die Öffnungen 16 eingeführt wird, aus den Ausnehmungen 10 entnommen werden. Wenn nur ein Gehäusedurchbruch 24 vorgesehen ist, wird die Werkzeugaufnahme zur Entnahme des zweiten Verriegelungselementes 11 um eine halbe Umdrehung gegenüber dem Gehäuse 2 gedreht. Anschließend kann die Werkzeugaufnahme 13 aus der Hülse 4 herausgezogen werden.

Eine andere Werkzeugaufnahme wird auf die Hülse 4 aufmontiert, indem die Demontageschritte in umgekehrter Reihenfolge vorgenommen werden. Die Verriegelungselemente werden zweckmäßigerweise mit Fett in den Ausnehmungen 10 gehalten, bevor der Ring 14 in seine Schließstellung gedreht wird. Die Schließstellung ist erreicht, wenn mindestens eine der Federzungen 18 in die Rastnut bzw. Rastnuten 19 fühlbar einrastet. Die Ausräumungen 20 an den Federzungen 18 verhindern, daß beim Überstreichen der Verriegelungselemente 11 bereits ein Einrasten spürbar ist und der Ring 14 dann nicht in seine vorgesehene Schließstellung weitergedreht wird.

Die Erfindung beschränkt sich nicht auf das gezeigte Ausführungsbeispiel insbesondere sind alle Arten von Werkzeugaufnaumen für bohrende oder schlagbohrende Werkzeuge geeignet. Auch kann die Werkzeugaufnahme anstatt in die Drehantriebshülse 4 einzugreifen auch über die Drehantriebshülse der Handwerkzeugmaschine aufgeschoben werden, wobei die Werkzeugaufnahme dann eine der Nut 15 entsprechende Ringnut aufweist, in die der Ring 14 eingreift.

## Patentansprüche

1. Handwerkzeugmaschine zum Bohren oder Schlagbohren, insbesondere Bohrhammer, mit einem Gehäuse (2), das einen Antriebsmotor aufnimmt, und mit einer drehend angetriebenen, abnehmbaren Werkzeugaufnahme (13), die auf eine mit dem Drehantrieb der Maschine in Verbindung stehende Hülse (4) aufsteckbar und dort durch Verriegelungselemente (11), insbesondere Kugeln oder Walzen, festlegbar ist, die sowohl in die Hülse (4) als auch in die Werkzeugaufnahme (13) eingreifen und von einem Ring (14) in ihrer Verriegelungsstellung gehalten werden, der um die Achse (21) der Werkzeugaufnahme drehbar ist und Mittel (16) zum Freigeben der Verriegelungselemente aufweist, dadurch gekennzeichnet, daß die Mittel als Öffnungen (16) zum Durchtritt der Verriegelungselemente (11) ausgebildet sind.

2. Handwerkzeugmaschine nach Anspruch 1, dadurch gekennzeichnet, daß der Ring (14) von außen zugängliche Haltemittel, insbesondere Arretierbohrungen (17), zum Festlegen des Rings (14) in Umfangsrichtung gegenüber dem Gehäuse (2) aufweist.

3. Handwerkzeugmaschine nach einem der vorhergehenden Ansprüche, dadurch gekennzeichnet, daß das Gehäuse (2) mindestens einen Durchbruch (23) aufweist, der mit einem Haltemittel (17) zum Festlegen des Rings (14) in Umfangsrichtung in Deckung bringbar ist.

4. Handwerkzeugmaschine nach einem der vorhergehenden Ansprüche, dadurch gekennzeichnet, daß der Ring (14) Rastmittel (18) zur drehfesten Fixierung des Rings (14) gegenüber der Hülse (4) oder der Werkzeugaufnahme (13) aufweist.

5. Handwerkzeugmaschine nach Anspruch 4, dadurch gekennzeichnet, daß die Rastmittel (18) jeweils eine den Verriegelungselementen zugewandte Ausräumung (20) zum rastfreien Überstreichen der Verriegelungselemente (11) aufweisen.

6. Handwerkzeugmaschine nach Anspruch 4 oder 5, dadurch gekennzeichnet, daß die Rastmittel als Federzungen (18) ausgebildet sind.

7. Handwerkzeugmaschine nach einem der vorhergehenden Ansprüche, dadurch gekennzeichnet, daß das Gehäuse (2) des Hammers zu den Öffnungen (16) im Ring (14) korrespondierende Durchbrüche (24) zum Entnehmen der Verriegelungselemente (11) aufweist.

8. Handwerkzeugmaschine nach einem der Ansprüche 6 oder 7, dadurch gekennzeichnet, daß der Ring (14) bezüglich seiner Öffnungen (16) und seiner Federzungen (18) im Querschnitt punktsymmetrisch zu einem Punkt seiner Mittelachse (21) gestaltet ist.

9. Handwerkzeugmaschine nach einem der Ansprüche 7 oder 8, dadurch gekennzeichnet, daß die Durchbrüche (23, 24) in einem während des Betriebs zum Beispiel durch einen Zusatzhandgriff überdeckbaren Bereich des Spannhalses (22) der Handbohrmaschine (1) angeordnet sind.

10. Handwerkzeugmaschine nach einem der Ansprüche 7 bis 9, dadurch gekennzeichnet, daß die Durchbrüche (23, 24) während des Bohrbetriebs von einer Hülse überdeckt werden.

11. Handwerkzeugmaschine nach Anspruch 1, dadurch gekennzeichnet, daß der Ring (14) als Blechring mit einer Materialstärke ausgebildet ist, die geringer ist als der Durchmesser der Verriegelungselemente (11).

## Claims

1. Hand-tool appliance for drilling or percussion drilling, especially a hammer drill, having a housing (2) which receives a drive motor, and having a rotary driven, removable tool fixture (13), which can be placed onto a sleeve (4) connected to the rotary drive of the appliance and can be secured there by locking elements (11), especially balls or cylinders, which engage both in the sleeve (4) and in the tool fixture (13) and are held in their locking setting by a ring (14), which is rotatable about the axis (21) of the tool fixture and exhibits means (16) for the release of the locking elements, characterized in that the means are configured as openings (16) for the passage of the locking elements (11).

2. Hand-tool appliance according to Claim 1, characterized in that the ring (14) exhibits holding means which are accessible from the outside, especially retention bores (17), for securing the ring (14) in the peripheral direction relative to the housing (2).

3. Hand-tool appliance according to one of the preceding claims, characterized in that the housing (2) exhibits at least one aperture (23), which can be brought into line with a holding means (17) for securing the ring (14) in the peripheral direction.

4. Hand-tool appliance according to one of the preceding claims, characterized in that the ring (14) exhibits latching means (18) for the rotationally secure fixation of the ring (14) relative to the sleeve (4) or to the tool fixture (13).

5. Hand-tool appliance according to Claim 4, characterized in that the latching means (18) respectively exhibit a clearance (20), facing the locking elements, enabling the locking elements (11) to be brushed over in a latch-free manner.

6. Hand-tool appliance according to Claim 4 or 5, characterized in that the latching means are configured as flexible tongues (18).

7. Hand-tool appliance according to one of the preceding claims, characterized in that the housing (2) of the hammer exhibits apertures (24), corresponding to the openings (16) in the ring (14), for the withdrawal of the locking elements (11).

8. Hand-tool appliance according to one of Claims 6 or 7, characterized in that the ring (14) is shaped, with respect to its openings (16) and its flexible tongues (18), point-symmetrically in cross-section to a point on its centre axis (21).

9. Hand-tool appliance according to one of Claims 7 or 8, characterized in that the apertures (23, 24) are disposed in a region of the collar (22) of the hand-drill (1) which can be covered over during operation, for example, by an auxiliary handle.

10. Hand-tool appliance according to one of Claims 7 to 9, characterized in that the apertures (23, 24) are covered over, during the drilling operation, by a sleeve.

11. Hand-tool appliance according to Claim 1, characterized in that the ring (14) is configured as a sheet-metal ring having a material thickness which is less than the diameter of the locking elements (11).

## Revendications

1. Machine-outil portable pour perçage ou perçage à percussion, notamment marteau à percussion, comportant un boîtier (2) contenant le moteur d'entraînement, un porte-outil démontable (13) entraîné par le moteur et qui peut être emmanché sur une douille (4) reliée à l'entraînement fourni par la machine et fixée sur cette douille par des éléments de verrouillage (11), en particulier des billes ou des rouleaux en prise à la fois avec la douille (4) et avec le porte-outil (13) avec maintien de cette prise par la présence d'un anneau (14) pouvant tourner autour de l'axe (21) du porte-outil et équipé de moyens (16) permettant de dégager les éléments de verrouillage, caractérisé en ce que ces moyens sont des ouvertures (16) que peuvent traverser les éléments de verrouillage (11).

2. Machine-outil portable selon la revendication 1, caractérisé en ce que l'anneau (14) est équipé d'organes de maintien, accessibles de l'extérieur, notamment des trous d'arrêt (17), servant à bloquer l'anneau (14) sur le boîtier (2) en direction périphérique.

3. Machine outil portable selon l'une des revendications précédentes, caractérisé en ce que le boîtier (2) présente au moins un passage (23) qui peut être amené en superposition d'un organe de maintien (17) bloquant l'anneau (14) en direction périphérique.

4. Machine-outil portable selon l'une d es revendications précédentes, caractérisé en ce que l'anneau (14) est équipé d'organes d'arrêt (18) empêchant la rotation de l'anneau (14) par rapport à la douille (4) ou le porte-outil (13).

5. Machine-outil portable selon la revendication 4, caractérisé en ce que les dispositifs d'arrêt (18) présentent chacun une dépression (20) en regard des éléments de verrouillage permettant le franchissement, sans être arrêté, des éléments de verrouillage (11).

6. Machine-outil portable selon la revendication 4 ou 5, caractérisée en ce que les dispositifs d'arrêts sont réalisés sous forme de languettes (18).

7. Machine-outil portable selon l'une des revendications précédentes, caractérisé en ce que le boîtier (2) de la machine présente des passages disposés en correspondance avec les ouvertures (16) de l'anneau (14), et permettant de dégager les éléments de verrouillage (11).

8. Machine-outil portable selon l'une des revendications 6 ou 7, caractérisé en ce que l'anneau (14), en ce qui concerne ses ouvertures (16) et ses languettes élastiques (18) est, en coupe, symétrique par rapport à un point de son axe central (21).

9. Machine-outil portable selon l'une des revendications 7 ou 8, caractérisé en ce les passages (23, 24) sont situés dans une zone du collet de prise (22) de la perceuse à main (1), qui peut être recouverte par exemple par une poignée auxiliaire.pendant le fonctionnement

10. Machine-outil portable selon l'une des revendications 7 à 9, caractérisé en ce que les passages (23, 24) sont recouverts, pendant le perçage, par une douille.

11. Machine-outil portable selon la revendication 1, caractérisé en ce que l'anneau (14) est réalisé à partir d'une tôle d'épaisseur inférieure au diamètre des éléments de verrouillage (11).
